# FASCICULE DE BREVET EUROPEEN

(11) **EP 2 579 187 B1**
(45) Date de publication et mention de la délivrance du brevet: **08.08.2018**
(21) Numéro de dépôt: 12186823.6
(22) Date de dépôt: 01.10.2012
(51) Int. Cl.: G06K 19/077

(54) **Dispositif à microcircuit équipé de plages de contact et procédé de fabrication d'un tel dispositif**
Mikrochip-Vorrichtung, die mit Kontaktbereichen ausgestattet ist und Herstellungsverfahren einer solchen Vorrichtung
Microcircuit device equipped with contact pads and method of manufacturing such a device

(30) Priorité: 03.10.2011 FR 1158894
(43) Date de publication de la demande: 10.04.2013
(73) Titulaire: IDEMIA France, 92700 Colombes (FR)
(72) Inventeur: Condemine, Olivier, 92000 Nanterre (FR)
(74) Mandataire: Jacobacci Coralis Harle

(56) Documents cités:
- EP-A1- 1 862 947
- EP-A2- 2 940 623
- WO-A1-2013/007942
- US-A1- 2005 021 895
- US-A1- 2009 327 529

## Description

### Arrière-plan de l'invention

La présente invention se rapporte à un dispositif à microcircuit muni de plages de contact et concerne plus particulièrement des dispositifs à microcircuit, tels que des cartes à puce par exemple, ayant un nombre limité de plages de contact pour communiquer, au moyen de différents types d'interfaces de communication, avec l'extérieur.

L'invention se rapporte en outre aux procédés de fabrication et de configuration de tels dispositifs à microcircuit.

L'invention s'applique notamment, mais de façon non exclusive, aux cartes à puce, telles que les cartes SIM (pour « *SubscriberIdentity Module*»)*,* conformes au standard ISO 7816. Ces cartes présentent un format normalisé 1FF, 2FF, 3FF ou 4FF par exemple (FF pour « *Form Factor*»)*.*

De manière générale, un dispositif à microcircuit tel qu'une carte à puce est conçu pour communiquer avec un dispositif externe communément appelé terminal de lecture ou lecteur. Ce type de cartes, très largement utilisé dans le domaine de la sécurisation de données, permet d'effectuer divers types de transactions, telles que des transactions de paiement ou d'authentification du porteur, par exemple. Les cartes à microcircuit pour applications bancaires (carte de crédit, carte de débit etc.), par exemple, sont aptes à communiquer avec des terminaux de paiement.

Les cartes SIM sont généralement utilisées comme des éléments amovibles de stockage d'informations dans des applications de téléphonie mobile, de type GSM ou UMTS par exemple. Ces dispositifs permettent notamment de stocker de façon sécurisée les données personnelles de l'abonné (son annuaire...) et des paramètres de personnalisation de son terminal (paramètres de messagerie...).

En règle générale, ces dispositifs à microcircuit communiquent avec un lecteur externe au moyen de plages de contact électrique et/ou d'une antenne couplés à des interfaces de communication mises en oeuvre dans la puce.

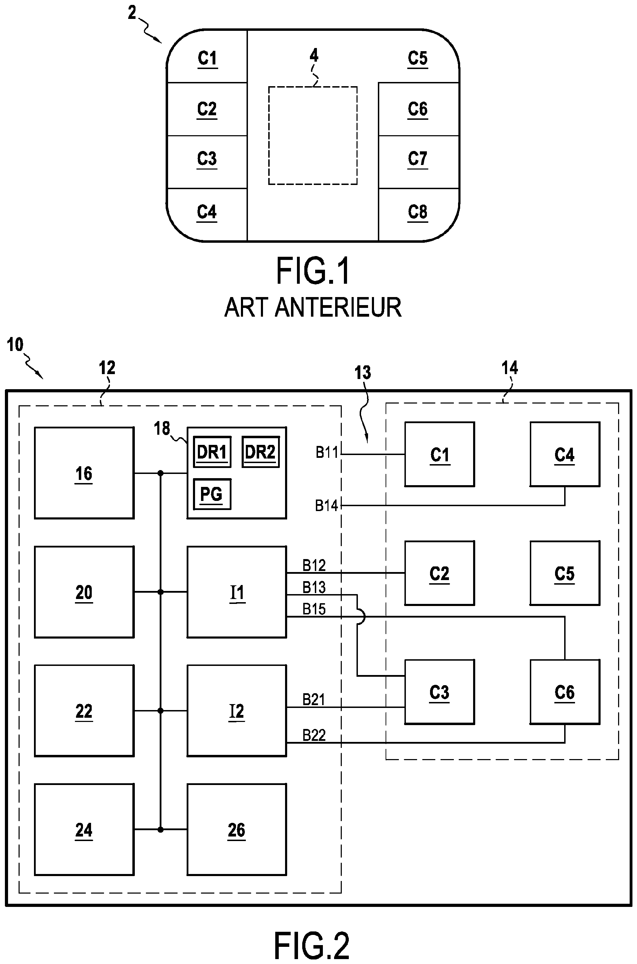

Conformément à la norme ISO 7816 (dénommée par la suite « norme ISO »), les cartes à microcircuit telles que les cartes SIM sont équipées de 6 à 8 plages de contact permettant de coopérer avec les bornes de contact d'un lecteur externe. La **figure 1** représente schématiquement un exemple de dispositif à microcircuit 2 comprenant 8 plages de contacts notées C1, C2, C3, C4, C5, C6, C7 et C8 conformément à la norme ISO, le microcircuit 4 étant relié à certaines plages de contact via des fils de connexion (non représentés) selon un agencement bien connu de l'homme du métier.

Les plages de contact C1 à C8 sont couplées avec au moins une interface de communication agencée dans le microcircuit 4 de la carte. Ce microcircuit 4 comporte en outre un microprocesseur apte à traiter des informations et communiquer via une interface de communication appropriée avec un lecteur de carte externe.

Aujourd'hui, un nombre grandissant de protocoles de communication est susceptible d'être utilisé par le microprocesseur d'une carte à puce pour fonctionner en coopération avec un lecteur externe. Le microprocesseur embarqué dans les cartes SIM, par exemple, est susceptible de communiquer avec l'extérieur selon le protocole ISO, USB, SWP, MMC...

De façon connue, certains dispositifs à microcircuit tels que les cartes SIM sont capables de communiquer selon plusieurs protocoles en fonction du terminal de lecteur avec lequel ils interagissent. Pour fonctionner normalement, une carte SIM doit ainsi utiliser le protocole de communication adapté au lecteur externe sollicité.

Les documents de brevet FR2783336 et WO02/31761A1 notamment décrivent des cartes à puce susceptibles de fonctionner selon le standard ISO ou USB. Les concepts de carte décrits dans ces documents mettent à profit les plages de contact C4 et C8 réservées selon la norme ISO 7816 pour une future utilisation, aucune fonction n'étant à l'origine affectée à ces plages non connectées. Les documents ci-dessus proposent de connecter ces plages de contact C4 et C8 au microcircuit de la carte afin d'être utilisées comme bus de données.

Cependant, le déposant a observé qu'il n'existe à ce jour aucune solution technologique simple et efficace permettant de faire fonctionner, selon plusieurs protocoles de communication, une carte SIM munie de 6 plages de contact traditionnelles de type ISO 7816.

Le document de brevet EP1887494A1 propose une carte à puce, disposant de 8 plages de contact de type ISO 7816, capable d'interagir avec l'extérieur à l'aide de deux interfaces de communication différentes. Certaines plages de contact sont divisées en deux parties conductrices indépendantes l'une de l'autre, chacune de ces parties étant reliée électriquement à une interface différente. Ces parties de plages de contact constituent, en soit, des plages (ou « sous-plages ») de contact distinctes non conformes à la norme ISO 7816. La division en deux sous-plages de contact permet d'avoir deux zones de contact séparées pour pouvoir être connectées indépendamment l'une de l'autre à l'aide d'un connecteur non conforme à la norme ISO 7816.

De plus, les sous-plages de contact envisagées dans le document EP1887494A1 sont disposées en forme de peigne de telle sorte que, une fois la carte à puce engagée dans un lecteur à connecteur ISO, les bornes du lecteur réalisent systématiquement un court-circuit entre les deux parties conductrices (ou « sous-plages ») des plages de contact.

Le déposant a toutefois identifié des inconvénients majeurs liés au concept de carte à puce enseigné dans le document EP1887494A1. La division en sous-plages de contact entraîne notamment un accroissement sensible de la complexité (et du coût) de fabrication de ces cartes. Par ailleurs, ce concept n'est pas applicable aux plages de contact ISO traditionnelles ce qui proscrit l'utilisation d'anciennes plages de contact pour la fabrication de cartes selon le document EP1887494A1.

Le document US 2005/021895 A1 datant du 27 janvier 2005 divulgue une carte mémoire comprenant une broche USB d'alimentation, une pluralité de broches de contact (1 à 7) et un contrôleur. Le contrôleur communique avec une entité externe au moyen de la broche USB d'alimentation et des broches de contact. Le contrôleur comprend un premier module pour contrôler la communication avec un dispositif USB et un deuxième module pour contrôler la communication avec un dispositif de type autre que USB.

Le document EP 1862947 A1 datant du 5 décembre 2007 décrit un dispositif de sécurité destiné à être connecté à une unité de traitement d'un signal audio/vidéo. Ce dispositif comprend des moyens pour déchiffrer un flux audio/vidéo, une interface de type ISO 7816 et une interface de type USB.

Le document US 2009/327529 A1 datant du 31 décembre 2009 décrit un dispositif de stockage de données apte à fonctionner selon un mode utilisateur ou un mode fabricant. Le mode utilisateur permet au dispositif de fonctionner selon un protocole standard (ISO, USB...) tandis que le mode fabricant permet le téléchargement rapide de données.

De manière générale, il existe aujourd'hui un besoin pour une solution simple et efficace permettant à un dispositif à microcircuit (tel qu'une carte à puce) muni d'un nombre limité de plages de contact de changer le protocole selon lequel il fonctionne en fonction du lecteur externe avec lequel il interagit.

### Objet et résumé de l'invention

L'invention est définie dans le jeu de revendications ci-joint.

A cet effet, la présente invention concerne un dispositif à microcircuit conforme à la revendication 1:

Les interfaces de communications sont par exemple sélectionnées parmi les types de protocole suivants : ISO 7816, USB, SWP et MMC.

Dans un mode préféré, la première interface est de type ISO et la deuxième interface de type USB.

Le partage d'au moins une plage de contact comme le prévoit l'invention permet avantageusement à un dispositif à microcircuit de coopérer avec un lecteur externe selon au moins deux protocoles de communication différents. Grâce à l'invention, le dispositif peut sélectionner le protocole de communication à mettre en oeuvre en fonction du terminal de lecteur avec lequel il interagit, et ce avec un nombre réduit de plages de contact.

En outre, l'invention est avantageuse en ce qu'elle n'impose aucune modification structurelle au niveau des plages de contact. De cette manière, il est possible d'utiliser des plages de contact traditionnelles de type ISO 7816 par exemple. Seules les connexions entre le microcircuit et les plages de contact doivent être adaptées afin qu'au moins une plage de contact soit connectée simultanément à deux interfaces de communication différentes. La simplicité de fabrication du dispositif de l'invention permet de limiter le coût inhérent à la production.

L'invention est également avantageuse en ce qu'une grande variété de connecteurs peut être utilisée pour réaliser la connexion entre un lecteur externe et les plages de contact du dispositif de l'invention, et notamment les plages dites partagées. Ainsi, quels que soient la forme de la borne du lecteur et/ou l'endroit sur la plage partagée où la borne vient prendre contact, le contact électrique ainsi établi permet toujours de communiquer avec toutes les interfaces de communication reliées à ladite plage partagée.

La liaison électrique entre chacune des interfaces et ladite au moins une plage partagée est par exemple réalisée sur une borne de connexion dédiée de chaque interface.

Selon un premier mode de réalisation, le dispositif comporte en outre des moyens de détection du protocole requis par le dispositif externe, le protocole configuré par les moyens de configuration étant fonction du protocole requis détecté par les moyens de détection.

Les moyens de détection peuvent par exemple être aptes à détecter le protocole requis par le dispositif externe à partir d'une analyse temporelle d'un signal reçu depuis le lecteur externe sur au moins l'une des plages de contact lors d'un démarrage du dispositif.

Selon une première variante du premier mode ci-dessus, les moyens de détection sont aptes à détecter un changement d'état pouvant survenir au niveau de la plage de contact normalisée RST dans un délai prédéfini à compter du démarrage du dispositif, la configuration du dispositif par les moyens de configuration étant fonction de la détection ou non du changement d'état.

Selon une deuxième variante du premier mode ci-dessus, la détection du protocole requis par le lecteur externe est réalisée à partir du profil dans le temps d'un signal reçu sur la plage de contact normalisée CLK.

Ces première et deuxième variantes permettent de déterminer rapidement et sans traitement excessif le type de protocole utilisé par le lecteur externe avec lequel coopère le dispositif de l'invention.

Selon un deuxième mode de réalisation, le dispositif comprend en outre des moyens de réception d'un pilote en provenance du lecteur externe, la configuration du dispositif par lesdits moyens de configuration étant réalisée à partir dudit pilote reçu. La configuration du dispositif selon le pilote (ou driver) reçu permet avantageusement au dispositif de communiquer avec l'extérieur (e.g. avec le lecteur externe) via l'interface correspondante, et selon le protocole approprié.

Grâce aux caractéristiques revendiquées, un dispositif à microcircuit équipé de seulement 6 plages de contact peut coopérer avec un lecteur externe selon, soit le protocole ISO, soit le protocole USB, en fonction du protocole requis par le lecteur en question.

Corrélativement, l'invention concerne un procédé de fabrication d'un dispositif à microcircuit conforme à la revendication 8.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite représente, de manière schématique, les plages de contact d'une carte à puce traditionnelle conforme à la norme ISO 7816 ;
- la figure 2 représente, de manière schématique, l'architecture d'un dispositif à circuit intégré conforme à un mode de réalisation particulier de l'invention ;
- la figure 3 est une vue en perspective du dispositif à circuit intégré représenté en figure 2 ;
- la figure 4 représente, de manière schématique, l'architecture d'un lecteur de carte conforme à un mode de réalisation particulier de l'invention ;
- la figure 5 est un diagramme représentant le profil des signaux de type ISO 7816 et USB susceptibles d'être reçus sur les différentes plages de contact du dispositif de l'invention illustré en figures 2 et 3;
- la figure 6 représente, sous la forme d'un organigramme, les principales étapes (E1 à E6) d'un procédé de configuration selon un mode de réalisation particulier de l'invention ; et
- la figure 7 représente, sous la forme d'un organigramme, les principales étapes (E50 à E56) d'un procédé de fabrication selon un mode de réalisation particulier de l'invention.

### Description détaillée d'un mode de réalisation

L'invention concerne un dispositif à microcircuit muni de plages de contact et concerne plus particulièrement des dispositifs à microcircuit, tels que des cartes à puce par exemple, ayant un nombre limité de plages de contact pour communiquer, au moyen de différents types d'interfaces de communication, avec l'extérieur.

Dans l'exemple de réalisation préféré décrit ci-dessous, l'invention correspond à une carte SIM de format 4FF conformément à la norme ISO. On comprendra néanmoins que l'invention s'applique à tous types de dispositif à microcircuit muni de plages de contact via lesquelles on souhaite communiquer avec un lecteur externe selon au moins deux protocoles de communication différents.

L'invention concerne en particulier les cartes à puce (cartes bancaires, cartes SIM...) de format quelconque ainsi que les cartes à mémoire, de type MMC et/ou SD par exemple.

La **figure 2** représente, de manière schématique, l'architecture d'un dispositif à microcircuit 10 conforme à un mode de réalisation particulier de l'invention. Dans cet exemple, le dispositif 10 est un module à microcircuit destiné à être agencé dans un corps de carte (non représenté) de façon à former une carte SIM (de format 4FF par exemple) conforme à la norme ISO 7816.

Plus particulièrement, la module à microcircuit 10 comprend un microcircuit 12 relié électriquement via des fils de connexion 13 à une plateforme de contact 14 comportant six plages de contact C1, C2, C3, C4, C5 et C6.

Dans cet exemple, le positionnement et les dimensions des plages de contact C1 à C6 sont conformes à la norme ISO 7816. Pour former une carte SIM, le module à microcircuit 10 est monté dans le corps de carte de façon à ce que les plages de contact C1 à C6 affleurent à la surface dudit corps. Les plages de contact C1 et C4 sont la plage d'alimentation et la plage de masse du module à microcircuit 10, respectivement. Ainsi, la plage de contact C1 permet l'alimentation du module à microcircuit 10 par un dispositif extérieur connecté à la surface extérieure de la plage de contact et la plage de contact C4 est la masse associée. Par ailleurs, les plages de contact C2, C3, C5 et C6 correspondent à des plages de contact utilisées pour la transmission de données entre le module à microcircuit 10 et un dispositif extérieur.

On entend dans ce document par « plage de contact », une zone conductrice unique dont tous les points sont en permanence au même potentiel, que la plage de contact coopère ou non avec un lecteur externe. Une plage de contact permet la réalisation d'un contact électrique avec le connecteur d'un terminal de lecteur externe.

Le microcircuit 12 comprend un microprocesseur 16, une mémoire morte (de type ROM) 18, une mémoire volatile réinscriptible (de type RAM) 20 et une mémoire non volatile réinscriptible 22 (de type EEPROM par exemple).

Dans l'exemple envisagé ici, la mémoire morte 18 constitue un support d'informations conforme à l'invention. Elle comprend un programme d'ordinateur PG conforme à un mode de réalisation particulier de l'invention dont les principales étapes E1 à E6 seront décrites ultérieurement.

Le microcircuit 12 comprend également deux interfaces de communications I1 et I2 différentes l'une de l'autre, celles-ci étant aptes à fonctionner selon respectivement deux protocoles de communications PR1 et PR2 différents l'un de l'autre. Dans cet exemple, l'interface I1 est une interface ISO apte à communiquer avec l'extérieur selon le protocole PR1 de type ISO et l'interface I2 est une interface USB apte à communiquer avec l'extérieur selon le protocole PR2 de type USB.

Dans cet exemple, la mémoire morte 18 comprend deux drivers (ou pilotes) différents notés DR1 et DR2. Le chargement du driver DR1 (respectivement DR2) dans le microcircuit 12 permet à ce dernier de communiquer avec un lecteur externe via l'interface correspondante I1 (respectivement I2) conformément au protocole PR1 (respectivement PR2).

On comprendra toutefois que l'invention peut s'appliquer pour un nombre d'interfaces de communication et de protocoles supérieur à 2.

Le microcircuit 12 comprend en outre :
- des moyens de détection 24 aptes à détecter un protocole de communication requis pour coopérer avec un terminal de lecture externe, et
- des moyens de configuration 26 aptes à configurer le microcircuit 12 afin que le dispositif 10 fonctionne selon le protocole de communication approprié.

Le microprocesseur 16 est apte à interagir avec les autres composants du microcircuit 12 via un bus de données.

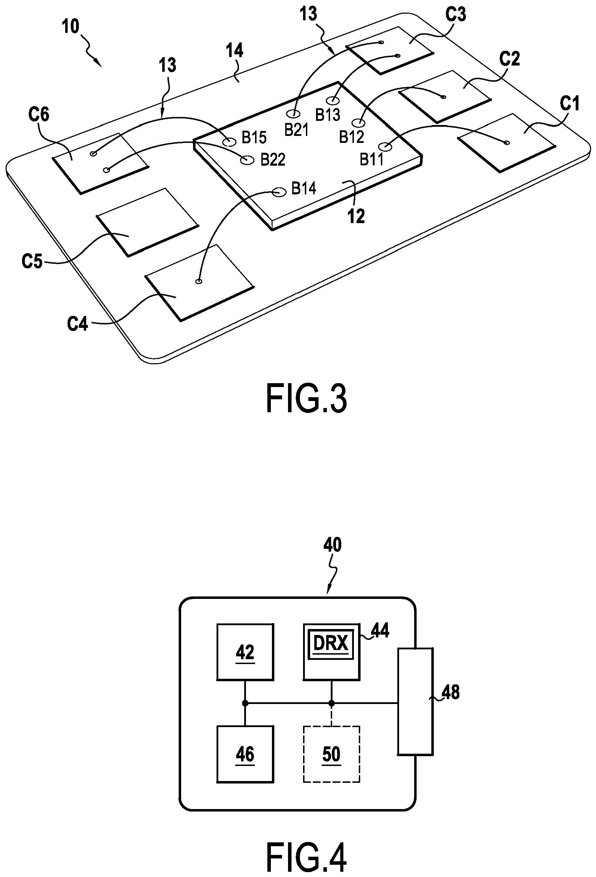

La **figure 3** est une vue en perspective schématisée du module 10 illustrant notamment l'agencement du microcircuit 12 vis-à-vis des plages de contact C1 à C6.

Comme représentée en figure 2 et 3, la première interface de communication I1 dispose, sur le microcircuit 12, de 3 bornes de connexion (ou plots de contact) notés B12, B13 et B15. De même, la deuxième interface de communication I2 dispose, sur le microcircuit 12, de 2 bornes de connexion (ou plots de contact) notés B21 et B22. Le microcircuit 12 comprend en outre deux bornes B11 et B14, respectivement pour les connexions de l'alimentation VCC et de la masse GND du microcircuit 12.

Les bornes B12, B13 et B15 et B21-B22 correspondent à différents ports d'entrée et/ou de sortie aménagés sur le microcircuit 12 pour permettent aux interfaces correspondantes de communiquer avec l'extérieur. On entend par interface de communication une ou plusieurs bornes du microcircuit 12 utilisées pour transmettre des signaux de données entre le microcircuit 12 et un dispositif extérieur.

Chacun des ports B11-B15 et B21-B22 est électriquement relié à l'une des plages de contact de la plateforme 14 via un fil électriquement conducteur 13.

On comprendra naturellement que d'autres agencements matériels des moyens de l'invention sont envisageables sans départir du cadre de l'invention. Par exemple, le module à microcircuit 12 peut comprendre plusieurs microcircuits, chacun pouvant communiquer au moyen d'une interface de communication propre avec un dispositif extérieur.

Dans l'exemple envisagé ici, les ports de l'interface I1 sont définis de la manière suivante conformément à la norme ISO 7816 :
- B12 correspond à RST (i.e. Reset), c'est-à-dire au port de réinitialisation de l'interface I1,
- B13 correspond à CLK (i.e. Clock), c'est-à-dire au port du signal d'horloge de l'interface I1, et
- B15 correspond au port I/O d'entrée/sortie.

Les ports B12, B13 et B14 de l'interface I1 permettent d'assurer une transmission bidirectionnelle de données entre le dispositif 10 et l'extérieur suivant le protocole ISO 7816-3.

De plus, les ports de l'interface I2 sont ici définis de la manière suivante conformément à la norme USB :
- B21 correspond au port D+, et
- B22 correspond au port D-.

Les ports D+ et D- de l'interface I2 permettent d'assurer une transmission bidirectionnelle de données entre le dispositif 10 et l'extérieur suivant le protocole USB.

Toujours dans cet exemple, les ports B12, B13 et B15 de l'interface I1 sont connectés électriquement aux plages de contact C2, C3 et C6, respectivement. De plus, les ports B21 et B22 de l'interface I2 sont connectés électriquement aux plages de contact C3 et C6, respectivement.

Les ports B11 et B14 du microcircuit 12, d'alimentation et masse, sont connectés électriquement aux plages de contact C1 et C4, respectivement.

La plage de contact C3 est donc connectée électriquement au port CLK de type ISO de l'interface I1 et au port D+ de type USB de l'interface I2. De même, la plage de contact C6 est connectée électriquement au port I/O de type ISO de l'interface I1 et au port D- de type USB de l'interface I2.

La plage de contact C5 n'est connectée ni à l'interface I1 ni à l'interface I2 dans le cas présent.

On comprendra toutefois que ce mode de réalisation est fourni à titre d'exemple pour illustrer l'invention et que d'autres affectations de ports et connexions avec les plages de contact sont envisageables. Par exemple, B21 et B22 peuvent correspondre respectivement à D- et D+.

Dans le mode de réalisation des figures 2 et 3, les plages de contact C3 et C6 sont des plages dites partagées, i.e. des plages de contact connectées électriquement à deux interfaces de communication différentes (I1 et I2) à la fois. Autrement dit, chacune des plages C3 et C6 est reliée électriquement à une borne de connexion de l'interface I1 et à une borne de connexion de l'interface I2.

Les liaisons électriques décrites ci-dessus entre les bornes B12, B13 et B15 et B21-B22 des interfaces, d'une part, et les plages de contact, d'autres parts, sont permanentes. Autrement dit, ces liaisons électriques sont assurées physiquement quel que soit l'état de fonctionnement du module 10. En particulier, ces liaisons électriques sont maintenues que le module 10 soit ou non en cours de coopération avec un lecteur externe.

En conséquence, les plages de contact C3 et C6 sont des plages partagées y compris hors coopération avec un lecteur externe.

De même, les liaisons électriques entre les bornes B11, B14 d'alimentation et de masse, d'une part, et les plages de contact, d'autres parts, sont permanentes.

La **figure 4** représente, de manière schématique, l'architecture d'un lecteur de carte 40 selon un mode de réalisation particulier de l'invention.

Le lecteur externe 40 comprend un microprocesseur 42, une mémoire morte (de type ROM) 44, une mémoire volatile réinscriptible 46 et un connecteur 48 adapté pour faire coopérer le lecteur externe 40 avec les plages de contact du dispositif 10. Dans cet exemple, le connecteur 48 est de type ISO.

De plus, la mémoire morte 44 comprend dans cet exemple un driver (ou pilote) DRX permettant au lecteur 40 de fonctionner selon un protocole correspondant PRX.

Le fonctionnement du dispositif 10 de l'invention en coopération avec le lecteur externe 40 est à présent décrit en référence aux **figures 2 à 6****.** Le module 10 met en oeuvre le procédé de configuration de l'invention (étapes E1 à E6) en exécutant le programme PG.

On considère ici le cas où une carte SIM (de format 4FF par exemple) comprenant le module 10 est insérée dans le connecteur 48 du lecteur externe 40. Cette insertion permet au module 10 de coopérer avec le lecteur 40 afin d'exécuter une opération quelconque, telle qu'un transfert ou une consultation de données, ou encore une transaction d'authentification ou de paiement par exemple.

Pour que l'opération désirée soit exécutée, il est nécessaire que le dispositif 10 fonctionne selon le protocole de communication requis par le lecteur externe 40. Dans cet exemple, le lecteur 40 met en oeuvre le protocole PRX pouvant correspondre soit au protocole PR1 (ISO dans cet exemple), soit au protocole PR2 (USB dans cet exemple).

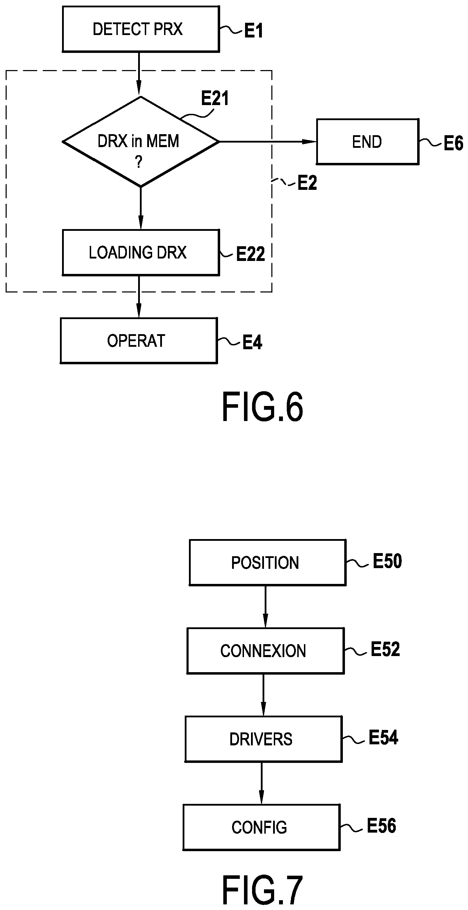

Le type du protocole PRX imposé par le terminal de lecture 40 n'est théoriquement pas connu à l'avance par le dispositif 10. Une fois la connexion établie entre le dispositif 10 et le lecteur 40, il est donc nécessaire que le dispositif à microcircuit 10 effectue une étape préliminaire E1 de détection du protocole PRX requis par le lecteur 40 **(****figure 6**).

Cette étape E1 de détection est réalisée par les moyens de détection 24 du microcircuit 12.

Au cours de l'étape E1, les moyens de détection 24 effectuent une analyse temporelle d'un signal reçu en provenance du lecteur externe 40 sur au moins l'une des plages de contact C1, C2, C3, C4 et C6 (à l'exception donc de C5 qui n'est pas connectée au microcircuit 12). Cette analyse temporelle est réalisée lors du démarrage du module 10 correspondant à sa mise sous tension dans le cas présent.

Cette étape E1 de détection peut être réalisée de différentes manières. Plusieurs variantes seront décrites plus en détail ultérieurement.

Une fois le protocole PRX identifié, les moyens de configuration 26 du microcircuit 12 configurent le module 10 afin que ce dernier fonctionne suivant ce même protocole PRX (étape E2).

Dans un mode de réalisation particulier, les moyens de configuration déterminent lors de l'étape E2 si le driver DRX permettant la mise en oeuvre du protocole de communication PRX est stocké dans la mémoire morte 18 (sous-étape E21). Si tel est le cas, les moyens de configuration 26 déclenchent (ou chargent) le driver DRX afin d'activer l'interface de communication correspondante (sous-étape E22). Le module 10 communique ensuite avec le lecteur externe 40 via l'interface de communication correspondante (I1 ou I2), i.e. via l'interface mettant en oeuvre le protocole PRX, de façon à exécuter l'opération désirée (étape E4).

Si en revanche le driver DRX nécessaire à la mise en oeuvre du protocole PRX n'est pas présent dans la mémoire 18, la configuration du module 10 prend fin et un message de fin de communication est éventuellement envoyé au lecteur externe 40 (étape E6).

En résumé, si le protocole requis PRX détecté par les moyens de détection 24 est PR1 (respectivement PR2), le microcircuit 12 communique ensuite avec le lecteur externe 40 via l'interface de communication I1 (respectivement I2) conformément au protocole PR1 (respectivement PR2). Si en revanche le protocole PRX ne correspond ni à PR1 ni à PR2, la communication avec le lecteur externe 40 prend fin car le module 10 ne dispose pas du driver et donc de l'interface de communication appropriés.

Dans une variante au mode de réalisation décrit ci-dessus, le lecteur externe 40 comprend des moyens d'envoi 50 aptes à envoyer au dispositif 10 le driver DRX adéquat, i.e. le driver permettant de communiquer selon le protocole requis PRX. Dans cette variante, les moyens de détection 24 sont remplacés par des moyens de réception 24 aptes à recevoir le driver DRX en provenance du lecteur externe 40 une fois la connexion établie entre les deux entités 10 et 40. Les moyens de configuration 26 configurent ensuite le dispositif 10 conformément au driver DRX afin de permettre la communication avec l'extérieur via l'interface (I1 ou I2) correspondante, selon le protocole approprié.

Alternativement, le dispositif 10 comprend à la fois des moyens de détection et des moyens de réception 24. Si aucun driver adéquat n'est reçu lors du démarrage du dispositif 10, ce dernier met en oeuvre le procédé de configuration de la figure 6.

Par ailleurs, l'étape de détection E1 mentionnée ci-avant peut être réalisée de diverses manières. Cette détection est possible car les caractéristiques des signaux échangés au cours d'une communication ISO et USB sont définies par ces normes.

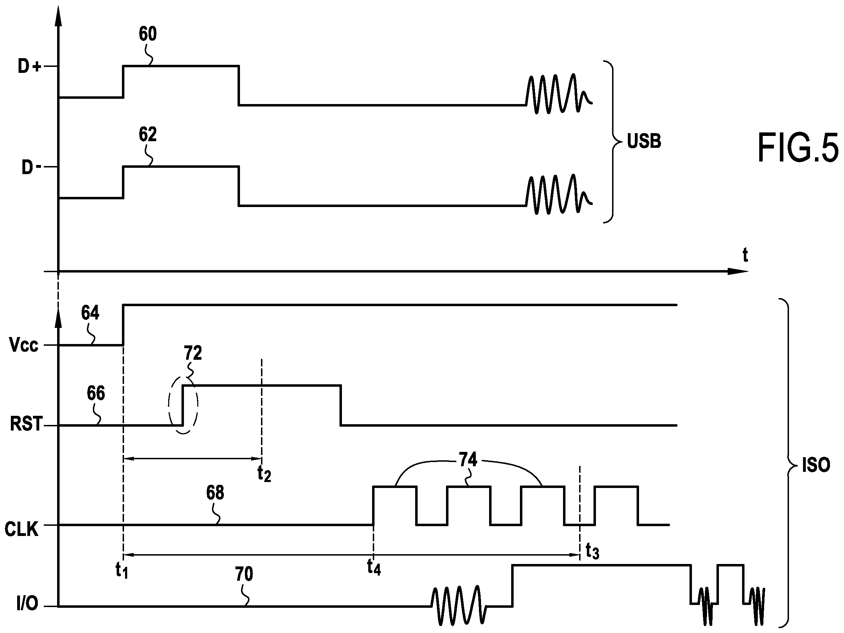

La **figure 5** représente de façon schématique le profil attendu des signaux USB et des signaux ISO lors du démarrage du module à microcircuit 10. Comme représenté sur cette figure, les profils 60 et 62 correspondant respectivement aux signaux D+ et D- présentent un front descendant simultané après un délai déterminé à compter du démarrage du module 10. Des données sont ensuite transférées conformément au protocole USB.

Les profils de type ISO 64, 66, 68 et 70 correspondent respectivement aux signaux Vcc, RST, CLK et I/O attendus au démarrage du module 10. A noter que la mise sous tension sur Vcc intervient ici à l'instant t1.

Plusieurs exemples de mise en oeuvre de l'étape de détection E1 sont à présent décrits ci-après.

Dans un premier exemple, les moyens de détection 24 analysent lors de l'étape E1 le signal reçu sur la plage de contact C2 afin de déterminer le protocole utilisé par le lecteur externe 40. L'analyse se fait ici sur une plage de contact qui n'est connectée qu'à un seul port (ou plot de contact) du microcircuit 12. Si les signaux reçus sur la plage de contact C2 sont identifiés par les moyens de détection 24 comme des signaux RST de type ISO, cela signifie que le protocole PRX utilisé par le lecteur externe 40 est le protocole ISO (PR1). Dans le cas contraire, le lecteur externe 40 utilise le protocole USB (PR2).

Pour déterminer si les signaux reçus sur la plage de contact C2 correspondent à des signaux RST, les moyens de détection 24 déterminent par exemple si un changement d'état 72 prévu par la norme ISO se produit dans le signal reçu. Cette détermination peut, par exemple, être réalisée sur une période comprise entre le démarrage du dispositif 10 à l'instant t1 et un temps t2 prédéfini. Un changement d'état est par exemple détecté lorsque survient une variation de signal supérieure ou égale à une valeur seuil prédéfinie.

Si un tel changement d'état 72 est détecté, les moyens de détection 24 en déduisent que les signaux reçus sur la plage de contact C2 sont de type RST défini par la norme ISO. Les moyens de configuration 26 déclenchent (étape E22) alors le driver DR1 de façon à ce que le microcircuit 12 communique avec l'extérieur via l'interface correspondant I1 de type ISO (selon le protocole ISO).

Si en revanche, aucun changement d'état 72 n'est détecté par les moyens de détection 24, les moyens de configuration 26 déclenchent (étape E22) le driver DR2 de façon à ce que le microcircuit 12 communique avec l'extérieur via l'interface correspondant I2 de type USB (selon le protocole USB).

Selon un deuxième exemple, les moyens de détection 24 analysent lors de l'étape E1 le signal reçu sur la plage de contact C3 afin de déterminer le protocole utilisé par le lecteur externe 40. L'analyse se fait ici sur une plage de contact partagée puisqu'elle est électriquement connectée aux ports CLK (borne B13) et D+ (borne B21) du microcircuit 12. Si les signaux reçus sur la plage de contact C3 sont identifiés par les moyens de détection 24 comme des signaux CLK de type ISO, cela signifie que le protocole utilisé par le lecteur externe 40 est le protocole ISO (PR1). Dans le cas contraire, cela signifie que le lecteur externe 40 utilise le protocole USB (PR2).

Conformément à la norme ISO, la réception des signaux CLK sur la plage C3 n'est censée débuter qu'après un délai prédéterminé à compter du démarrage du dispositif 10 (dans le cas naturellement où le lecteur externe fonctionne effectivement selon le protocole ISO). Les signaux CLK se présentent sous la forme d'une succession de créneaux 74 dont les caractéristiques sont définies par la norme ISO. En conséquence, pour déterminer si les signaux reçus sur la plage de contact C3 correspondent à des signaux CLK, les moyens de détection 24 déterminent si des signaux en forme de créneaux conformes à la norme ISO sont reçus entre le démarrage du dispositif 10 au temps t1 et un temps ultérieur t3 prédéfini. On suppose que les signaux d'horloge apparaissent à un temps t4 ultérieur à t1. Le temps t3 est choisi de telle sorte que le délai (t3-t4) soit suffisamment long pour permettre de détecter l'apparition éventuelle des créneaux 74.

De même que dans le premier exemple ci-avant, les moyens de configuration 26 déclenchent ensuite le driver adéquat (DR1 ou DR2) en fonction du résultat de l'étape de détection E1. Si le signal reçu sur la plage de contact C3 est CLK, le driver DR1 permettant la mise en oeuvre du protocole ISO (PR1) par l'interface I1 est déclenché par les moyens de configuration 26. Dans le cas contraire, le signal reçu sur la plage C3 correspond à D+ de sorte que le driver DR2, permettant la mise en oeuvre du protocole USB (PR2) par l'interface I2, est déclenché par les moyens de configuration 26.

A la lecture de ce document, l'homme du métier comprendra que d'autres alternatives sont envisageables dans le cadre de l'invention pour déterminer, lors de l'étape de détection E1, la nature du signal reçu sur une ou plusieurs plages de contact du dispositif de l'invention.

Les interfaces de communication I1 et I2, les moyens de détection et/ou les moyens de réception 24 et les moyens de configuration 26 peuvent chacun correspondre à un bloc fonctionnel mis en oeuvre par le microprocesseur 16.

Le partage d'au moins une plage de contact comme le prévoit l'invention permet avantageusement à un dispositif à microcircuit de coopérer avec un lecteur externe selon au moins deux protocoles de communication différents. Grâce à l'invention, le dispositif peut sélectionner le protocole de communication à mettre en oeuvre en fonction du terminal de lecteur avec lequel il interagit, et ce avec un nombre réduit de plages de contact.

En outre, l'invention est avantageuse en ce qu'elle n'impose aucune modification structurelle au niveau des plages de contact. De cette manière, il est possible d'utiliser des plages de contact traditionnelles de type ISO 7816 par exemple. Seules les connexions entre le microcircuit et les plages de contact doivent être adaptées afin qu'au moins une plage de contact soit connectée simultanément à deux interfaces de communication différentes. La simplicité de fabrication du dispositif de l'invention permet de limiter le coût inhérent à la production.

L'invention est également avantageuse en ce qu'une grande variété de connecteurs peut être utilisée pour réaliser la connexion entre un lecteur externe et les plages de contact du dispositif de l'invention, et notamment les plages dites partagées. Ainsi, quels que soient la forme de la borne du lecteur et/ou l'endroit sur la plage partagée où la borne vient prendre contact, le contact électrique ainsi établi permet toujours de communiquer avec toutes les interfaces de communication reliées à ladite plage partagée.

Les principales étapes d'un mode de réalisation particulier du procédé de fabrication du dispositif à microcircuit 10 sont à présent décrites en référence à la **figure 7****.**

Le procédé de fabrication comprend le positionnement (E50) des plages de contact C1 à C6 sur le dispositif 10 de façon à pouvoir coopérer avec un lecteur externe équipé d'un connecteur prévu à cet effet. Dans cet exemple, les plages de contact sont disposées conformément à la norme ISO 7816 afin de former une plateforme de contact 14 telle qu'illustrée en figures 3.

Les interfaces de communication sont ensuite reliées électriquement à au moins une plage de contact du dispositif de l'invention (étape E52). Chaque plot de contact des interfaces disposé sur le microcircuit est connecté électriquement à une plage de contact déterminée. Dans le cas présent, les ports B12, B13 et B15 de l'interface I1 sont connectés électriquement aux plages de contact C2, C3 et C6, respectivement. De plus, les ports B21 et B22 de l'interface I2 sont connectés électriquement aux plages de contact C3 et C6, respectivement. Cette connexion est réalisée à l'aide de fils électriquement conducteur, en or ou en aluminium par exemple.

De ce fait, la plage de contact C3 est connectée électriquement au port CLK (ISO) de l'interface I1 et au port D+ (USB) de l'interface I2. De même, la plage de contact C6 est connectée électriquement au port I/O (ISO) de l'interface I1 et au port D- (USB) de l'interface I2.

Les plages de contact C3 et C6 sont donc des plages dites partagées, i.e. des plages de contact connectées électriquement à deux interfaces de communication différentes (I1 et I2) à la fois.

La plage de contact C5 n'est connectée ni à l'interface I1 ni à l'interface I2 dans le cas présent.

Un pilote (ou driver) est également chargé (E54) dans une mémoire du microcircuit pour chaque interface de communication susceptible d'être mise en oeuvre dans le dispositif. Dans cet exemple, les drivers DR1 et DR2 sont stockés dans la mémoire morte 18. Lorsqu'ils sont déclenchés, ces drivers DR1 et DR2 permettent au microprocesseur 16 de mettre en oeuvre l'interface de communication I1 et I2, respectivement.

De plus, un module de configuration est chargé (E56) dans une mémoire du microcircuit. Une fois installé, ce module permet de mettre en oeuvre la fonction des moyens de configuration 26 précédemment décrits. Ce module permet en particulier au microcircuit 12 d'activer l'interface de communication I1 ou I2 en fonction du protocole appliqué par le lecteur externe 40. Le module de configuration permet ainsi au dispositif de mettre en oeuvre le protocole adapté au lecteur externe avec lequel il coopère.

Un homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

## Revendications

1. Dispositif (10) à microcircuit (12) comprenant :
- au moins une première et deuxième interfaces (I1, I2) de communication différentes l'une de l'autre, chaque interface étant configurée pour fonctionner selon un protocole de communication ISO, USB lui est propre,
- des plages de contact C1-C6 pour coopérer avec un lecteur externe (40), chaque interface de communication étant électriquement reliée à au moins une plage de contact dudit dispositif,
- des moyens de configuration (26) aptes à configurer ledit dispositif pour qu'il fonctionne selon l'un desdits protocoles, le dispositif à microcircuit étant **caractérisé en ce que**
au moins l'une desdites plages de contact dite plage partagée C3, C6 est électriquement reliée par une liaison électrique permanente à la première et à la deuxième interface y compris hors coopération avec ledit lecteur externe, et **en ce que**
le dispositif à microcircuit comporte 6 plages de contact C1-C6 de type ISO 7816, dans lequel les première et deuxième interfaces (I1, I2) sont respectivement de type ISO et USB, la plage de contact C3 étant une plage dite partagée reliée électriquement à une borne CLK de la première interface et à une borne D+ de la deuxième interface, la plage de contact C6 étant une plage dite partagée reliée électriquement à une borne I/O de la première interface et à une borne D- de la deuxième interface.

2. Dispositif selon la revendication 1, dans lequel ladite liaison électrique entre chacune desdites interfaces et ladite au moins une plage partagée est réalisée sur une borne de connexion (B12-B15, B21-B22) dédiée de chaque interface.

3. Dispositif selon la revendication 1 ou 2, comportant en outre des moyens de détection (24) du protocole requis par ledit dispositif externe, le protocole configuré par lesdits moyens de configuration étant fonction du protocole requis détecté par lesdits moyens de détection.

4. Dispositif selon la revendication 3, dans lequel les moyens de détection (24) sont aptes à détecter le protocole requis par le dispositif externe à partir d'une analyse temporelle d'un signal reçu depuis le lecteur externe sur au moins l'une desdites plages de contact lors d'un démarrage dudit dispositif.

5. Dispositif selon la revendication 4, les moyens de détection (24) étant aptes à détecter un changement d'état (72) pouvant survenir au niveau de la plage de contact normalisée RST (C2) dans un délai prédéfini à compter du démarrage (t1) dudit dispositif, la configuration dudit dispositif par les moyens de configuration étant fonction de la détection ou non dudit changement d'état.

6. Dispositif selon la revendication 4, la détection du protocole requis par le lecteur externe (40) étant réalisée à partir du profil dans le temps d'un signal reçu sur la plage de contact normalisée CLK.

7. Dispositif selon la revendication 1 ou 2, comprenant en outre des moyens de réception (24) d'un pilote en provenance dudit lecteur externe (40), la configuration du dispositif par lesdits moyens de configuration étant réalisée à partir dudit pilote reçu.

8. Procédé de fabrication d'un dispositif (10) à microcircuit (12) comprenant une première et une deuxième interface de communication (I1, I2), ledit procédé comprenant :
- le positionnement (E50) de plages de contact pour coopérer avec un lecteur externe (40),
- une étape (E52) de connexion électrique de chacune desdites interfaces à au moins une plage de contact dudit dispositif,
- le chargement (E54) d'un premier pilote (DR1) et d'un deuxième pilote (DR2) dans une mémoire (18) dudit dispositif, lesdits pilotes étant aptes à déclencher respectivement lesdites première et deuxième interfaces (I1, I2), lesdites interfaces étant configurées pour fonctionner respectivement selon un premier et un deuxième protocole de communication différents l'un de l'autre, et
- le chargement (E56) d'un module de configuration dans ladite mémoire pour sélectionner le protocole à mettre en oeuvre par ledit dispositif, le procédé étant **caractérisé en ce que**
l'étape de connexion (E52) est telle qu'au moins l'une desdites plages de contact dite plage partagée est électriquement reliée par une liaison électrique permanente à la première et à la deuxième interface y compris hors coopération avec ledit lecteur externe, et **en ce que**
le dispositif à microcircuit comporte 6 plages de contact C1-C6 de type ISO 7816, dans lequel les première et deuxième interfaces (I1, I2) sont respectivement de type ISO et USB, et
**en ce que**, la plage de contact C3 est une plage dite partagée reliée électriquement à une borne CLK de la première interface et à une borne D+ de la deuxième interface lors de l'étape de connexion (E52), la plage de contact C6 étant une plage dite partagée reliée électriquement à une borne I/O de la première interface et à une borne D- de la deuxième interface lors de l'étape de connexion (E52).

## Patentansprüche

1. Vorrichtung (10) mit Mikrochip (12), mit
- wenigstens einer ersten und einer zweiten Kommunikationsschnittstelle (I1, I2), die unterschiedlich sind, wobei jede Schnittstelle dazu ausgelegt ist, gemäß einem Kommunikationsprotokoll ISO, USB zu funktionieren, das ihr eigen ist,
- Kontaktbereichen C1 - C6 zum Zusammenwirken mit einem externen Lesegerät (40), wobei jede Kommunikationsschnittstelle mit wenigstens einem Kontaktbereich der Vorrichtung elektrisch verbunden ist,
- Konfigurationsmitteln (26), die dazu ausgelegt sind, die Vorrichtung so einzurichten, daß sie gemäß einem dieser Protokolle funktioniert,
wobei die Vorrichtung mit Mikrochip **dadurch gekennzeichnet ist, daß** wenigstens einer der Kontaktbereiche, als geteilter Bereich C3, C6 bezeichnet, über eine elektrische Dauerverbindung elektrisch mit der ersten und der zweiten Schnittstelle verbunden ist, auch außerhalb eines Zusammenwirkens mit dem externen Lesegerät, und daß die Vorrichtung mit Mikrochip sechs Kontaktbereiche C1 - C6 vom Typ ISO 7816 aufweist, bei der die erste und die zweite Schnittstelle (I1, I2) vom ISO-Typ bzw. vom USB-Typ sind, wobei der Kontaktbereich C3 ein als geteilter Bereich bezeichneter Bereich ist, der elektrisch mit einem CLK-Kontakt der ersten Schnittstelle und mit einem D⁺-Kontakt der zweiten Schnittstelle verbunden ist, wobei der Kontaktbereich C6 ein als geteilter Bereich bezeichneter Bereich ist, der elektrisch mit einem I/O-Kontakt der ersten Schnittstelle und mit einem D⁻-Kontakt der zweiten Schnittstelle verbunden ist.

2. Vorrichtung gemäß Anspruch 1, bei der die elektrische Verbindung zwischen jeder der Schnittstellen und dem wenigstens einen geteilten Bereich an einem bestimmten Anschlußkontakt (B12-B15, B21-B22) jeder Schnittstelle erfolgt.

3. Vorrichtung gemäß Anspruch 1 oder 2, die außerdem Mittel (24) zum Erkennen des von der externen Vorrichtung geforderten Protokolls aufweist, wobei das von den Konfigurationsmitteln eingerichtete Protokoll von dem durch die Erkennungsmittel erkannten geforderten Protokoll abhängt.

4. Vorrichtung gemäß Anspruch 3, bei der die Erkennungsmittel (24) dazu geeignet sind, das von der externen Vorrichtung geforderte Protokoll durch eine zeitliche Analyse eines von dem externen Lesegerät beim Ingangsetzen der Vorrichtung an wenigstens einem der Kontaktbereiche empfangenen Signals zu erkennen.

5. Vorrichtung gemäß Anspruch 4, wobei die Erkennungsmittel (24) dazu ausgelegt sind, eine Zustandsänderung (72), die am standardisierten RST-Kontaktbereich (C2) in einem vorbestimmten Zeitbereich nach Ingangsetzen (t1) der Vorrichtung auftreten kann, zu erkennen, wobei das Einrichten der Vorrichtung durch die Konfigurationsmittel vom Erkennen oder Nichterkennen der Zustandsänderung abhängt.

6. Vorrichtung gemäß Anspruch 4, wobei das Erkennen des vom externen Lesegerät (40) geforderten Protokolls vom zeitlichen Profil eines am standardisierten CLK-Kontaktbereich empfangenen Signals ausgehend erfolgt.

7. Vorrichtung gemäß Anspruch 1 oder 2, die außerdem Mittel (24) zum Empfangen eines vom externen Lesegerät (40) kommenden Piloten aufweisen, wobei das Einrichten der Vorrichtung durch die Konfigurationsmittel vom empfangenen Piloten ausgehend erfolgt.

8. Verfahren zum Herstellen einer Vorrichtung (10) mit Mikrochip (12), die eine erste und eine zweite Kommunikationsschnittstelle (II, I2) aufweist, wobei das Verfahren
- das Positionieren (E50) der Kontaktbereiche zum Zusammenwirken mit einem externen Lesegerät (40),
- einen Schritt (E52) des elektrischen Verbindens jeder der Schnittstellen mit wenigstens einem Kontaktbereich der Vorrichtung,
- das Laden (E54) eines ersten Piloten (DR1) und eines zweiten Piloten (DR2) in einen Speicher (18) der Vorrichtung, wobei die Piloten geeignet sind, die erste bzw. die zweite Schnittstelle (I1, I2) auszulösen, wobei die Schnittstellen dazu ausgelegt sind, gemäß einem ersten und einem zweiten Kommunikationsprotokoll, die unterschiedlich sind, zu funktionieren, und
- das Laden (E56) eines Konfigurationsmoduls in den Speicher, um das durch die Vorrichtung auszuführende Protokoll auszuwählen, aufweist,
wobei das Verfahren **dadurch gekennzeichnet ist, daß** der Schritt (E52) des Verbindens derart ist, daß wenigstens einer der Kontaktbereiche, der als geteilter Bereich bezeichnet ist, über eine elektrische Dauerverbindung elektrisch mit der ersten und der zweiten Schnittstelle verbunden ist, auch außerhalb eines Zusammenwirkens mit dem externen Lesegerät, und daß die Vorrichtung mit Mikrochip sechs Kontaktbereiche C1 - C6 vom Typ ISO 7816 aufweist, bei der die erste und die zweite Schnittstelle (I1, I2) vom ISO-Typ bzw. vom USB-Typ sind, und daß der Kontaktbereich C3 ein als geteilter Bereich bezeichneter Bereich ist, der beim Schritt des Verbindens (E52) elektrisch mit einem CLK-Kontakt der ersten Schnittstelle und mit einem D⁺-Kontakt der zweiten Schnittstelle verbunden wird, wobei der Kontaktbereich C6 ein als geteilter Bereich bezeichneter Bereich ist, der beim Schritt des Verbindens (E52) elektrisch mit einem I/O-Kontakt der ersten Schnittstelle und mit einem D⁻-Kontakt der zweiten Schnittstelle verbunden wird.

## Claims

1. A device (10) with a microcircuit (12) comprising:
- at least one first and one second communication interfaces (I1, I2), different from each other, each interface being configured to operate according to a communication protocol ISO, USB, that is peculiar to it,
- contact pads C1-C6 to cooperate with an external reader (40), each communication interface being electrically connected to at least one contact pad of said device,
- configuration means (26) adapted to configure said device so that it operates according to one of said protocols,
the microcircuit device being **characterized in that** at least one of said contact pads, called a "shared pad", C3, C6, is electrically connected by a permanent electrical link to the first and the second interfaces, including out of cooperation with said external reader, and **in that** the microcircuit device includes 6 contact pads C1-C6 of the ISO 7816 type, wherein the first and second interfaces (I1, I2) are of the ISO and USB type, respectively, the contact pad C3 being a so-called "shared pad" electrically connected to a terminal CLK of the first interface and to a terminal D+ of the second interface, the contact pad C6 being a so-called "shared pad" electrically connected to a terminal I/O of the first interface and to a terminal D- of the second interface.

2. The device according to claim 1, wherein said electrical link between each of said interfaces and said at least one shared pad is made on a dedicated connection terminal (B12-B15, B21-B22) of each interface.

3. The device according to claim 1 or 2, further including means (24) for detecting the protocol required by said external device, the protocol configured by said configuration means being function of the required protocol detected by said detection means.

4. The device according to claim 3, wherein the detection means (24) are adapted to detect the protocol required by the external device based on a time analysis of a signal received from the external reader on at least one of said contact pads when said device is started.

5. The device according to claim 4, the detection means (24) being adapted to detect a change of state (72) that may occur at the standard contact pad RST (C2) within a preset period from the starting (t1) of said device, the configuration of said device by the configuration means being function of the detection or not of said change of state.

6. The device according to claim 4, the detection of the protocol required by the external reader (40) being made based on the profile over time of a signal received on the standard contact pad CLK.

7. The device according to claim 1 or 2, further comprising means (24) for receiving a driver from said external reader (40), the configuration of the device by said configuration means being made based on said received driver.

8. A method for manufacturing a device (10) with a microcircuit (12) comprising a first and a second communication interfaces (I1, I2), said method including :
- the positioning (E50) of contact pads to cooperate with an external reader (40),
- a step (E52) of electrically connecting each of said interfaces to at least one contact pad of said device,
- the loading (E54) of a first driver (DR1) and a second driver (DR2) into a memory (18) of said device, said drivers being adapted to trigger said first and second interfaces (I1, I2), respectively, said interfaces being configured to operate according to a fist and a second communication protocols, respectively, different from each other, and
- the loading (E56) of a configuration module into said memory to select the protocol to be implemented by said device,
the method being **characterized in that** the connection step (E52) is such that at least one of said contact pads, called a "shared pad", is electrically connected by a permanent electrical link to the first and the second interfaces, including out of cooperation with said external reader, and **in that** the microcircuit device includes 6 contact pads C1-C6 of the ISO 7816 type, wherein the first and second interfaces (I1, I2) are of the ISO and USB type, respectively, and **in that** the contact pad C3 is a so-called "shared pad" electrically connected to a terminal CLK of the first interface and to a terminal D+ of the second interface during the connection step (E52), the contact pad C6 being a so-called "shared pad" electrically connected to a terminal I/O of the first interface and to a terminal D- of the second interface during the connection step (E52).
